# EUROPEAN PATENT APPLICATION

(11) **EP 3 400 853 A1**
(43) Date of publication of application: **14.11.2018**
(21) Application number: 17170776.3
(22) Date of filing: 12.05.2017
(51) Int. Cl.: A47J 31/44, A47J 42/40

(54) **COFFEE POWDER DISTRIBUTION DEVICE**

(71) Applicant: Yang, Yu-Ming, New Taipei City 22174 (TW); Yeh, Shih-Huang, New Taipei City 22174 (TW); Chen, Yen-Ping, New Taipei City 22174 (TW)
(72) Inventor: Yang, Yu-Ming, New Taipei City 22174 (TW); Yeh, Shih-Huang, New Taipei City 22174 (TW); Chen, Yen-Ping, New Taipei City 22174 (TW)
(74) Representative: Viering, Jentschura & Partner mbB Patent- und Rechtsanwälte

(57) **Abstract**

A coffee powder distribution device includes a rotary member (200). The rotary member (200) includes a shaft (201) and a plurality of blades (202). The shaft (201) is rotatable along an axis (600). The blades (202) are disposed on the shaft (201) and each have an inclined angle relative to the axis (600). Through rotation of the shaft (201), the blades (202) are rotated coaxially to guide coffee powder to evenly fall down and distribute in a carrier (100).

## Description

### FIELD OF THE INVENTION

The present invention relates to a coffee powder distribution device, and more particularly to a device for coffee powder to be evenly distributed in a carrier.

### BACKGROUND OF THE INVENTION

When brewing espresso, the coffee powder is filled in a cup-shaped filter of an espresso machine. After pouring the coffee powder into the cup-shaped filter, the coffee is extracted with high-pressure water vapor to pass through the coffee powder in the filter. However, after filling the coffee powder into the filter, it is necessary to tap or strike the filer on the table for the coffee powder to be evenly distributed in the filter so that the water vapor can pass through the coffee powder evenly to extract better coffee.

However, the way of tapping the filter belongs to personal experience. Sometimes, the coffee powder cannot be evenly distributed, resulting in that the concentration of coffee is not consistent each time. When the coffee powder is not evenly distributed, the time for the water vapor to pass through dense coffee powder is longer than the time for the water vapor to pass through thin coffee powder. As a result, the coffee extracted from the area of dense coffee power is stronger than the coffee extracted from the area of thin coffee power. It can be known that when the density of coffee power is different, the flavor of coffee will be different. Accordingly, the inventor of the present invention has devoted himself based on his many years of practical experiences to solve these problems.

### SUMMARY OF THE INVENTION

The primary object of the present invention is to provide a coffee powder distribution device to overcome the problem of the prior art. The coffee powder distribution device comprises a rotary member. The rotary member includes a shaft and a plurality of blades. The coffee powder distribution device further comprises an upper cover. The shaft is rotatable along an axis. The blades are disposed on the shaft and each have an inclined angle relative to the axis. The upper cover includes an annular member and a grooved member. The annular member is configured to receive one end of the shaft and restrict the stroke of the rotary member. The grooved member is formed with a groove to receive the blades and to restrict the stroke of the blades.

According to the aforesaid, it can be seen that the present invention uses the blades to guide the coffee powder to be distributed layer by layer after falling, so that the coffee powder is evenly distributed in a carrier to extract better coffee.

Preferably, the inclined angle is between 10-55 degrees for various grain sizes of coffee powder. The length or the inclined angle of the adjacent blades or the distance from the vertex of the blade to the shaft may be different.

Preferably, the coffee powder distribution device further comprises an axial blocking member disposed at the end of the shaft passing through the annular member. The shaft is secured between the upper cover and a cup-shaped body through the axial blocking member.

Preferably, the coffee powder distribution device further comprises an axial blocking member for fixing the rotary member to a cup-shaped body. The rotary member is restricted to rotate toward an opening so that the axial movement of the rotary member is restricted. The rotary member is coaxially rotatable relative to the cup-shaped body.

### BRIEF DESCRIPTION OF THE DRAWINGS

FIG. 1 is an exploded view in accordance with an embodiment of the present invention; and
FIG. 2 (a) to FIG. 2 (e) illustrates the successive operation in accordance with the embodiment of the present invention.

### DESCRIPTION OF THE PREFERRED EMBODIMENTS

Advantages and features of the inventive concept and methods of accomplishing the same may be understood more readily by reference to the following detailed description of embodiments and the accompanying drawings. Spatially relative terms, such as "upper," "lower," "left," "right," and the like, may be used herein for ease of explanation to describe one element or feature's relationship to another element(s) or feature(s) as illustrated in the figures. The inventive concept may, however, be embodied in many different forms and should not be construed as being limited to the embodiments set forth herein. In this embodiment, a cup-shaped body used for an espresso machine is taken as an explanation of this embodiment, but not limited thereto.

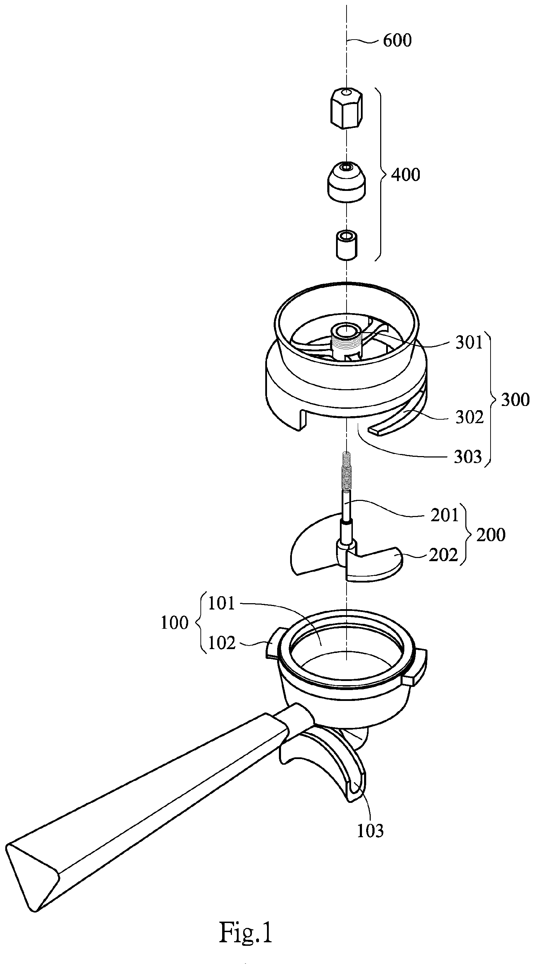

FIG. 1 is an exploded view in accordance with an embodiment of the present invention. This embodiment includes a cup-shaped body 100 which is cylindrical relative to a first axis 600 for receiving the coffee powder to be extracted. The cup-shaped body 100 includes a first opening 101 whose opening direction is parallel to the first axis 600. The cup-shaped body 100 further includes a lug unit 102 which is a protrusion structure in this embodiment. The lug unit 102 of the cup-shaped body 100 corresponds to a groove (not shown in the drawings) of the espresso machine, so that the cup-shaped body 100 is secured to the espresso machine.

This embodiment further includes a rotary member 200. The rotary member 200 is configured to distribute the coffee powder evenly. The rotary member 200 includes a shaft 201 and a plurality of blades 202. The shaft 201 is disposed in the first opening 101 of the cup-shaped body 100 and coaxially rotated relative to the cup-shaped body 100. The blades 202 are disposed on the shaft 201 and arranged in a staggered manner at a specific angle with the first axis 600.

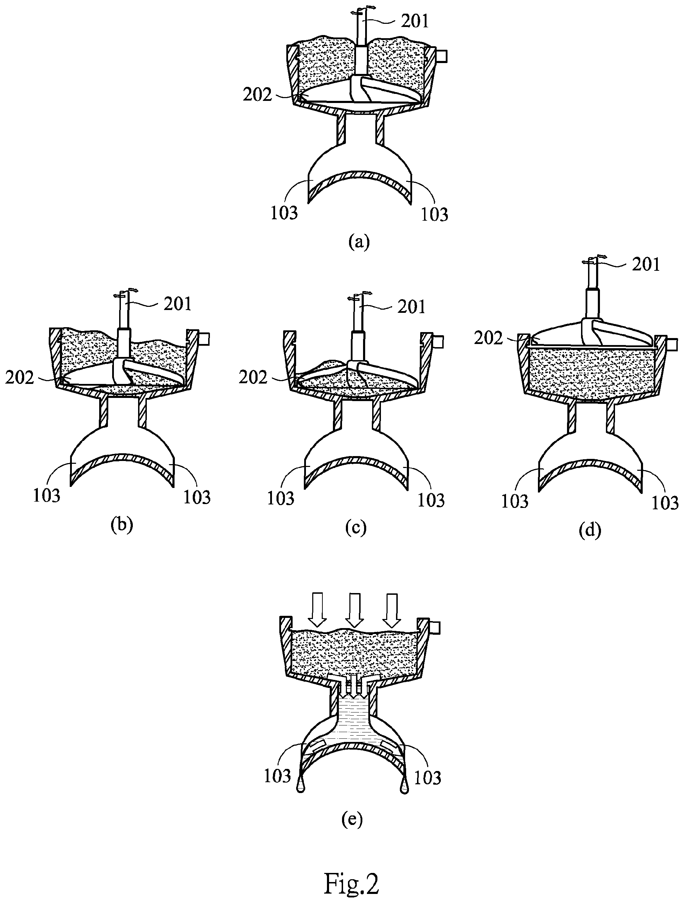

FIG. 2 (a) to FIG. 2 (e) illustrates the successive operation in accordance with the embodiment of the present invention. As the above- described, the blades 202 are disposed on the shaft 201 and arranged in a staggered manner at a specific angle with the first axis 600 to form an inclined angle α. In order to distribute the coffee powder evenly, the inclined angle α is preferably between 10-55 degrees for various grain sizes of coffee powder. When the coffee powder is to be extracted, the cup-shaped body 100 is used to receive the coffee powder to be extracted. The shaft 201 is driven to rotate coaxially relative to the cup-shaped body 100. The blades 202 are driven to guide the coffee powder to gradually fall into the cup-shaped body 100. The length or the inclined angle of the adjacent blades 202 or the distance from the vertex of the blade 202 to the shaft 201 may be different.

More specifically, referring to FIG. 2 (a) to FIG. 2 (e), the coffee powder to be extracted is placed on the blades 202. When the shaft 201 is rotated, the blades 202 are driven to ascend so that the coffee powder slides down from the tops of the blades 202 as shown in FIG. 2 (b) and FIG. 2 (c), and the bottoms of the blades 202 can level the coffee powder while rotating to facilitate the distribution of the coffee powder. From the vertical cross-section of the cup-shaped body 100, it can be seen that the coffee powder distributed by this embodiment has several fault lines (as shown in FIG. 2 (d)) which slant upward. The coffee powder can be evenly distributed in the cup-shaped body 100 (as shown FIG. 2(e)) by the continuous operation described above. In other words, when the distribution of all the coffee powder is completed, the blades 202 are at the top and the coffee powder is between the blades 202 and the cup-shaped body 100. By rotating the shaft 201 to drive the blades 202, the coffee powder evenly falls in the cup-shaped body 100.

Referring to FIG. 1, this embodiment further includes an upper cover 300 to mate with the first opening 101 in order to adequately cover the coffee powder to be extracted. The upper cover 300 includes an annular member 301 located at the center of the upper cover 300. The annular member 301 is adapted to receive one end of the shaft 201 through which the stroke of the rotary member 200 is restricted. In addition, the upper cover 300 further includes a grooved member 302 which forms a groove 303 to accommodate the blades 202. The groove 303 formed by the grooved member 302 is adapted to restrict the stroke of the blades 202, so that the operation of the rotary member 200 is more stable.

Referring to FIG. 1, as the above described, one end of the shaft 201 passes through the annular member 301. This embodiment further includes an axial blocking member 400 disposed at the end of the shaft 201 passing through the annular member 301. Through the axial blocking member 400, the shaft 201 is secured between the upper cover 300 and the cup-shaped body 100. The axial blocking member 400 may be a set of nuts to lock the end of the shaft 201 passing through the annular member 301, so that the shaft 201 is secured thereat. In this embodiment, the upper cover 300 is mated with the cup-shaped body 100, and the rotary member 200 can be stably held between the upper cover 300 and the cup-shaped body 100 by the axial blocking member 400, and the rotary member 200 is restricted to rotate in the direction of the opening. Although the axial movement of the rotary member 200 is restricted, the rotary member 200 is coaxially rotatable relative to the cup-shaped body 100.

The coffee powder to be extracted can sufficiently evenly drop in the cup-shaped body 100 by the guiding of this embodiment. When the coffee powder is extracted with high-pressure steam, the water vapor can evenly pass through all the coffee powder to brew better coffee, and the coffee flows out from a second opening 103 of the cup-shaped body 100. For convenient operation, the cup-shaped body 100 of this embodiment may include a handle 500. The handle 500 is connected to the cup-shaped body 100, so that the user can grasp the handle 500 for operation.

Compared to the prior art, the coffee powder is pushed down by the blades 202 while the rotary member 200 of the present invention is rotated to ascend. When all the coffee powder is pushed down, the rotary member 200 is at the top end to level the coffee powder so that the density of the coffee powder in the cup-shaped body 100 is the same. The cup-shaped body 100 is secured to the espresso machine via the lug unit 102, and then the espresso can be extracted with high pressure water vapor.

Although particular embodiments of the present invention have been described in detail for purposes of illustration, various modifications and enhancements may be made without departing from the spirit and scope of the present invention. Accordingly, the present invention is not to be limited except as by the appended claims.

## Claims

1. A coffee powder distribution device, comprising:
a rotary member, including:
a shaft, the shaft being rotatable along a first axis; and
a plurality of blades, the blades being disposed on the shaft and each having an inclined angle relative to the first axis;
an upper cover, including:
an annular member, the annular member being configured to receive one end of the shaft and restrict the stroke of the rotary member; and
a grooved member, the grooved member being formed with a groove to receive the blades and to restrict the stroke of the blades, wherein the annular member is disposed in the grooved member and connected with an inner side of the annular member.

2. The coffee powder distribution device as claimed in claim 1, wherein the inclined angle is between 10-55 degrees.

3. The coffee powder distribution device as claimed in claim 1, further comprising an axial blocking member disposed at the end of the shaft passing through the annular member, the shaft being secured between the upper cover and a cup-shaped body through the axial blocking member.

4. The coffee powder distribution device as claimed in claim 1, further comprising an axial blocking member for fixing the rotary member to a cup-shaped body, the rotary member being restricted to rotate toward an opening so that axial movement of the rotary member is restricted, the rotary member being coaxially rotatable relative to the cup-shaped body.
